# EUROPÄISCHE PATENTANMELDUNG

(11) **EP 0 741 462 A2**
(43) Veröffentlichungstag der Anmeldung: **06.11.1996**
(21) Anmeldenummer: 96106766.7
(22) Anmeldetag: 29.04.1996
(51) Int. Cl.: H04B 1/38, H04M 1/02

(54) **Handfunkgerät**

(30) Priorität: 04.05.1995 DE 19516447
(71) Anmelder: SIEMENS AKTIENGESELLSCHAFT, 80333 München (DE)
(72) Erfinder: Fenske, Horst, Dipl.-Ing., 82256 Fürstenfeldbruck (DE)

(57) **Zusammenfassung**

Das Handfunkgerät ist zur Verminderung der an den Kopf des Benutzers abgegebenen elektromagnetischen Strahlung mit einem Feldstärkeindikator versehen, der ein von der Empfangsfeldstärke abhängiges, dem Nutzsignal überlagertes akustisches Signal erzeugt.

## Beschreibung

Die Erfindung bezieht sich auf ein Handfunkgerät mit einem Sender/Empfänger, mit Hör- und Sprecheinrichtungen und einer zugehörigen Geräteantenne.

Handfunkgeräte sind in verschiedenen Ausführungsformen, z.B. als Handgeräte von sogenannten schnurlosen Telefonen, City-Funkgeräte (CB-Funkgeräte, Walkie-Talkies) oder als Handgeräte (Handhelds) für den Mobilfunk verfügbar. Derartige Geräte sind üblicherweise mit einer Antenne versehen, die sich bei normaler Betriebshaltung in unmittelbarer Nähe des Kopfes des Benutzers befindet. Im Sendebetrieb emittiert die Antenne elektromagnetische Funksignale unter anderem in Richtung des Kopfes. Außerdem wirkt der Kopf abschattend für die Funksignale.

In jüngster Zeit ist eine Diskussion über eine mögliche negative physiologische Beeinflussung des menschlichen Körpers, insbesondere des Kopfes, durch die elektromagnetischen Funksignale entstanden. Zuverlässige Erkenntnisse liegen hierüber jedoch noch nicht vor.

In der EP 0 505 299 A1 ist ein Hörfunkgerät beschrieben, bei dem zur Vorbeugung gegen den möglichen negativen Einfluß der Funksignale der Fußpunkt des strahlenden Teils der Antenne des Handgerätes über dem Gehäuse erhöht angeordnet ist. Zu diesem Zweck ist zwischen dem strahlenden Teil und dem Gehäuse ein nicht strahlender Teil als Abstandshalter vorgesehen. Durch eine derartige Ausgestaltung der Antenne gelangt nur noch ein unbedeutender Teil der elektromagnetischen Strahlung in den Kopf des Benutzers.

Bei einem in der EP 0 532 960 A1 beschriebenen Funkgerät ist eine versenkbare Stabantenne vorgesehen, die aus einem hohlzylindrischen, in das Gehäuse des Gerätes versenkbaren bzw. umklappbaren, nicht strahlenden Teil (Abstandshalter) und einem im Abstandshalter teleskopartig verschiebbar geführten strahlenden Teil besteht.

Auch eine adaptive Leistungsregelung vermindert die gesundheitlichen Gefahren und - dies ist der ursprüngliche Zweck - sie spart wertvolle Batteriekapazität. Beim Mobilfunksystem GSM (Groupe Special Mobile) wird die Sendeleistung bis auf 20 mW abgesenkt, wenn die Übertragungsbedingungen dies zulassen. Allerdings kommt die Leistungsregelung praktisch nie optimal zum Einsatz, weil sich die Antenne in der Regel im Funkschatten befindet. Besonders ungünstig ist der Fall, in dem der Kopf des Benutzers sich zwischen Basisstation und Mobilantenne befindet. Dabei dämpft der Kopf das Signal erheblich (bis zu 20 dB), so daß die Sendeleistungsregelung dies durch Leistungserhöhung versuchen wird, wieder auszugleichen.

Da bei GSM die hörbare Qualität praktisch konstant gehalten wird und erst kurz vor Verbindungsabbruch abnimmt, erhält der Benutzer keine Information über die Kanalqualität. Er kann seine Position somit nicht entsprechend korrigieren, indem er z.B. das Gerät in die andere Hand nimmt oder sich umdreht. Dies hat zur Folge, daß Stromverbrauch und Belastung durch das elektromagnetische Feld hoch bleiben.

Günstig für eine Verminderung des Einflusses elektromagnetischer Felder sind meistens entsprechende Verhaltensweisen, wie z.B. in Gebäuden immer in Fensternähe zu telefonieren und dabei die Antenne in Richtung Fenster zu richten.

Der Erfindung liegt die Aufgabe zugrunde, ein Handfunkgerät zu schaffen, bei dem die an den Kopf des Benutzers abgegebene elektromagnetische Strahlung noch weiter vermindert wird.

Diese Aufgabe wird bei einem Handfunkgerät der eingangs beschriebenen Art gemäß der Erfindung gelöst durch einen Feldstärkeindikator, der ein von der Empfangsfeldstärke abhängiges, dem Nutzsignal überlagertes akustisches Signal erzeugt.

Vorteilhafte Ausgestaltungen und Weiterbildungen des Erfindungsgegenstandes sind in den Unteransprüchen angegeben.

Durch die erfindungsgemäßen Maßnahmen ergibt sich für den Benutzer in einfacher Weise eine Feldstärkeanzeige. Er hat damit die Möglichkeit, sich so zu drehen, daß die maximale Empfangsfeldstärke vorliegt und sich somit längste Batteriedauer und geringste Strahlungsbelastung einstellen.

Während der Benutzung des Handfunkgerätes kann eine Taste betätigt werden (z.B. die i-Taste (Informationstaste) des Mobiltelefons lange gedrückt halten), die bewirkt, daß ein von der Empfangsfeldstärke abhängiges akustisches Signal dem Nutzsignal überlagert wird.

Als akustische Signale eignen sich das weiße Rauschen, dessen Amplitude sich mit der Empfangsfeldstärke verringert, ein Sinuston, dessen Frequenz sich mit der Empfangsfeldstärke erhöht oder ein getasteter Ton, dessen Takt sich mit der Empfangsfeldstärke erhöht. Dabei bezieht sich die Normamplitude, -frequenz bzw. der Normtakt auf die Empfangsfeldstärke, die zum Zeitpunkt der Aktivierung vorliegt. Die Variationsbreite bezieht sich auf ± 20 dB Empfangspegeländerung. Das Abschalten kann über erneute Tastenbetätigung und/oder einen Timer erfolgen.

Die Implementierung der Feldstärkeindikation ist allein durch Software möglich, wobei die Teile MMI (Man Machine Interface), und DSP (Digital Signal Processor) betroffen sind. Dies ist mit geringem Aufwand möglich.

## Patentansprüche

1. Handfunkgerät mit einem Sender/Empfänger, mit Hör- und Sprecheinrichtungen und einer zugehörigen Geräteantenne,
**gekennzeichnet durch**
einen Feldstärkeindikator, der ein von der Empfangsfeldstärke abhängiges, dem Nutzsignal überlagertes akustisches Signal erzeugt.

2. Handfunkgerät nach Anspruch 1,
**dadurch gekennzeichnet,**
daß die Überlagerung des akustischen Signals durch eine Tastenbetätigung des Handfunkgerätes bewirkt wird.

3. Handfunkgerät nach Anspruch 1 oder 2,
**dadurch gekennzeichnet,**
daß das akustische Signal aus einem weißen Rauschen besteht, dessen Amplitude sich mit der Empfangsfeldstärke verringert.

4. Handfunkgerät nach Anspruch 1 oder 2,
**dadurch gekennzeichnet,**
daß das akustische Signal aus einem Sinuston besteht, dessen Frequenz sich mit der Empfangsfeldstärke erhöht.

5. Handfunkgerät nach Anspruch 1 oder 2,
**dadurch gekennzeichnet,**
daß das akustische Signal aus einem getasteten Signal besteht, dessen Takt sich mit der Empfangsfeldstärke erhöht.

6. Handfunkgerät nach einem der vorhergehenden Ansprüche,
**gekennzeichnet durch**
eine Software-Implementierung.
